# EUROPÄISCHE PATENTSCHRIFT

(11) **EP 3 879 201 B1**
(45) Veröffentlichungstag und Bekanntmachung des Hinweises auf die Patenterteilung: **10.05.2023**
(21) Anmeldenummer: 20162379.0
(22) Anmeldetag: 11.03.2020
(51) Int. Cl.: F24H 7/04, F28D 20/00, F28D 20/02

(54) **UNTERIRDISCHE PUFFERSPEICHERVORRICHTUNG SOWIE VERFAHREN ZUR PUFFERSPEICHERUNG IN EINEM WÄRMESPEICHERMEDIUM**
SUBTERRANEAN BUFFER STORAGE DEVICE AND METHOD FOR BUFFER STORAGE IN A HEAT STORAGE MEDIUM
DISPOSITIF DE STOCKAGE TAMPON SOUTERRAIN AINSI QUE PROCÉDÉ DE STOCKAGE TAMPON DANS UN SUPPORT DE MOYEN DE STOCKAGE DE CHALEUR

(43) Veröffentlichungstag der Anmeldung: 15.09.2021
(73) Patentinhaber: Korpan, Nikolai N., 1090 Wien (AT); Palant, Volodymyr G., 03049 Kyiv (UA)
(72) Erfinder: Korpan, Nikolai N., 1090 Wien (AT); Palant, Volodymyr G., 03049 Kyiv (UA)
(74) Vertreter: Patentanwaltskanzlei Matschnig & Forsthuber OG

(56) Entgegenhaltungen:
- WO-A1-2018/161172
- WO-A1-2019/054120
- DE-A1-102007 026 149
- DE-A1-102010 037 474
- JP-A- H02 178 573
- US-A- 4 205 718
- US-A- 4 378 908
- Pablo Martin Sequi: "MODELLING OF THE DYNAMIC BEHAVIOUR OF AN ADVANCED ADIABATIC COMPRESSED AIR ENERGY STORAGE (AA-CAES)", Dissertation UPM, 1 November 2018 (2018-11-01), XP055731474, Retrieved from the Internet: URL:http://oa.upm.es/53802/1/TFG_PABLO_MAR TIN_SEQUI.pdf [retrieved on 2020-09-17]

## Beschreibung

Die Erfindung betrifft eine unterirdischen Pufferspeichervorrichtung zur Wärmespeicherung sowie ein Verfahren zur Pufferspeicherung von Wärme in einer mit einem Wärmespeichermedium befüllten unterirdischen Pufferspeichervorrichtung.

Aus dem Stand der Technik sind bereits unterschiedliche Ausführungsformen von Wärmespeichervorrichtungen, die zum Zwischenspeichern bzw. zum Puffern von überschüssiger Wärmeenergie dienen, bekannt.

Unter einem Puffer versteht man üblicherweise in einer Heizungsanlage einen Wärmespeicher, der mit Wasser befüllt ist. Er dient dazu, Differenzen zwischen der erzeugten und der verbrauchten Wärmeleistung auszugleichen, um die Wärmeerzeugung zeitlich vom Verbrauch entkoppeln zu können. Dies verbessert Betriebsverhalten, Wirkungsgrad und Haltbarkeit vieler Wärmeerzeuger. Für den Betrieb von Wärmepumpen ist ein Pufferspeicher an sich nicht zwingend erforderlich, verbessert aber die Jahresarbeitszahl. Insbesondere kann durch den Einsatz von Pufferspeichern bei Wärmepumpen das Lastausgleichspotenzial von Wärmepumpen im Stromnetz verbessert werden.

Fernwärmespeicher sind zumeist drucklose, mit Wasser gefüllte Behälter, die Schwankungen im Wärmebedarf des Fernwärmenetzes bei gleicher Erzeugungsleistung der Fernheizwerke ausgleichen sollen. Bei Fernwärmenetzen werden üblicherweise sehr große Fernwärmespeicher mit Volumina von mehreren 100 m³ oder sogar mehreren 1000 m³ Inhalt verwendet, um darin Überschusswärme zwischenzuspeichern bzw. zu puffern.

Nachteilig ist dabei zumindest der kontinuierliche Wärmeverlust, der sich durch die Temperaturdifferenz zwischen Speicherinhalt und Umgebung ergibt. Der Verlust lässt sich durch Wärmedämmung (unter Vermeidung von Wärmebrücken) verringern. Um größere Mengen an überschüssiger Wärmeenergie beispielsweise in mit Wasser befüllten Pufferspeichern zwischenzulagern, sind nachteilig große Speicherbehälter erforderlich, die sehr aufwendig isoliert werden müssen, um Wärmeverluste möglichst zu reduzieren. Solche Speicherbehälter sind jedoch teuer in ihrer Errichtung, sind wartungsanfällig und benötigen viel Platz.

Saisonbedingte Verbrauchsschwankungen und begrenzte Quellen für die Versorgung mit natürlichen Brennstoffen machen es vielfach notwendig, nach unkonventionellen Methoden zur Gewinnung und Speicherung von Wärmeenergie zu suchen.

Die Offenlegungsschrift DE102010037474 A1 offenbart eine Pufferspeichervorrichtung mit einem mit Wärmespeichermedium befüllten, als unterirdischer Tank ausgeführten Speicherbehälter, einem Primärkreislauf mit erstem Wärmeübertrager, dazu eingerichtet ist, Überschusswärme in den Speicherbehälter einzubringen, sowie einem Sekundärkreislauf mit zweitem Wärmeübertrager, über den bei Bedarf Wärme aus dem Speicherbehälter wieder abzuführen. WO 2019/054120 A1 offenbart eine weitere Pufferspeichervorrichtung aus dem Stand der Technik.

Die Erfindung bezweckt, die aus dem Stand der Technik bekannten Nachteile von herkömmlichen Wärmespeichervorrichtungen möglichst zu überwinden und dazu eine Pufferspeichervorrichtung für große Mengen an Überschusswärme anzugeben, die kostengünstig in der Errichtung sowie im Betrieb ist bei gleichzeitig geringem Platzbedarf, wenig Wärmeverluste an die Umgebung hat und mit der es möglich ist, saisonbedingte Verbrauchschwankungen von benötigter Wärmeenergie beispielsweise zur Gebäudeheizung zu glätten. Mit Hilfe der erfindungsgemäßen Wärmespeichervorrichtung soll es möglich sein, beispielsweise die Beheizung, die Warmwasserversorgung oder die Klimatisierung von Gebäuden sicherstellen.

Diese Aufgaben werden bei einer Wärmespeichervorrichtung mit den Merkmalen des Anspruchs 1 gelöst.

Die Unteransprüche betreffen weitere vorteilhafte Ausgestaltungen der Erfindung.

Erfindungsgemäß umfasst eine Pufferspeichervorrichtung einen mit einem Wärmespeichermedium in Form von Salzsole befüllten unterirdischen Speicherbehälter, einen mit einem ersten Wärmeträgermedium befüllten Primärkreislauf, sowie einen mit einem zweiten Wärmeträgermedium befüllten Sekundärkreislauf, wobei ein erster Wärmeübertrager im Primärkreislauf, der vom ersten Wärmeträgermedium durchströmt ist, dazu eingerichtet ist, in den Primärkreislauf eingespeiste Überschusswärme vom ersten Wärmeträgermedium an die Salzsole im unterirdischen Speicherbehälter zu übertragen, und ein zweiter Wärmeübertrager im Sekundärkreislauf, der vom zweiten Wärmeträgermedium durchströmt ist, dazu eingerichtet ist, im Bedarfsfall zumindest teilweise die in der Salzsole im unterirdischen Speicherbehälter gespeicherte Überschusswärme an das zweite Wärmeträgermedium zu übertragen, wobei der Sekundärkreislauf mit zumindest einem Wärmeverbraucher gekoppelt ist.

Ein unterirdischer Speicherbehälter zur Aufnahme des Wärmespeichermediums bietet zahlreiche Vorteile. Als Wärmeisolierung dient bei einem solchen unterirdischen Speicherbehälter das umliegende Gestein bzw. das umliegende Erdreich. Wärmeverluste des Speicherbehälters können somit besonders effizient reduziert werden. Auch der Platzbedarf eines solchen unterirdischen Speicherbehälters ist sehr gering. Bei der erfindungsgemäßen Pufferspeichervorrichtung ragen bloß der Primärkreislauf sowie der Sekundärkreislauf an die Erdoberfläche. Alle weiteren Bestandteile der Pufferspeichervorrichtung können zweckmäßig unterirdisch installiert sein. Der Primärkreislauf dient zum Einspeisen von Überschusswärme beispielsweise in Form von Abwärme aus einer industriellen Fertigung in das Wärmespeichermedium. Dazu umfasst der Primärkreislauf entsprechende Rohrleitungen, in denen ein erstes Wärmeträgermedium im Kreislauf gepumpt werden kann, sowie einen ersten Wärmeübertrager im Primärkreislauf, der vom ersten Wärmeträgermedium durchströmt ist, und der dazu eingerichtet ist, in den Primärkreislauf eingespeiste Überschusswärme vom ersten Wärmeträgermedium an die Salzsole im unterirdischen Speicherbehälter zu übertragen. Die Einspeisung der Überschusswärme bzw. Abwärme in den Primärkreislauf kann beispielsweise durch Zwischenschaltung eines weiteren Wärmeübertragers erfolgen. Der erste Wärmeübertrager ist dazu mit dem Speicherbehälter bzw. dem darin befindlichen Wärmespeichermedium in Form von Salzsole wärmeleitend gekoppelt.

Der Sekundärkreislauf umfasst ebenfalls entsprechende Rohrleitungen, in denen ein zweites Wärmeträgermedium im Kreislauf gepumpt werden kann. Weiters umfasst der Sekundärkreislauf einen zweiten Wärmeübertrager, der vom zweiten Wärmeträgermedium durchströmt ist, und der dazu vorgesehen ist, im Bedarfsfall zumindest teilweise die in der Salzsole im unterirdischen Speicherbehälter gespeicherte Überschusswärme an das zweite Wärmeträgermedium zu übertragen. Der zweite Wärmeübertrager ist dazu ebenfalls mit dem Speicherbehälter bzw. dem darin befindlichen Wärmespeichermedium in Form von Salzsole wärmeleitend gekoppelt.

Weiters ist der Sekundärkreislauf mit zumindest einem Wärmeverbraucher gekoppelt, an den die Überschusswärme vom zweiten Wärmeträgermedium beispielsweise unter Zwischenschaltung eines weiteren Wärmeübertragers abgegeben werden kann.

Vorteilhaft ist die Pufferspeichervorrichtung ein in sich geschlossenes System mit einem an sich geschlossenen Speicherbehälter sowie den beiden ebenfalls in sich geschlossenen Kreisläufen, dem Primärkreislauf sowie dem Sekundärkreislauf. Die darin befindlichen Medien, also das erste Wärmeträgermedium im Primärkreislauf sowie das zweite Wärmeträgermedium im Sekundärkreislauf kommen mit dem Wärmespeichermedium, der Salzsole, nicht in direkten Kontakt im Sinne eines Stoffaustauschs. Der Betrieb der Pufferspeichervorrichtung ist daher ökologisch sicher, es gibt dabei keine umweltschädlichen Emissionen.

Zusammengefasst ist mit einer Pufferspeichervorrichtung gemäß der Erfindung eine besonders effiziente Wärmespeicherung von Überschusswärme möglich.

Gemäß der Erfindung ist der unterirdische Speicherbehälter der Pufferspeichervorrichtung ein Hohlraum in einer wasserdichten Gesteinsschicht, vorzugsweise in einem Salzstock, sein.

Diese Ausführung bietet den Vorteil, dass die Kosten zur Errichtung der Pufferspeichervorrichtung entsprechend reduziert werden können, indem ein bereits bestehender unterirdischer Hohlraum als Speicherbehälter verwendet wird. Ein solcher unterirdischer Hohlraum kann natürlichen Ursprungs sein - beispielsweise ein unterirdischer See, der sich in einer wasserdichten Gesteinsschicht wie einem Salzstock gebildet hat. Ein solcher Hohlraum kann auch künstlich entstanden sein, beispielsweise in einem Salzbergwerk durch entsprechende Auslaugung des salzführenden Gesteins. Überdies bietet das salzführende Gestein eines Salzstocks den Vorteil einer besonders guten Wärmespeicherwirkung bzw. einer sehr guten Wärmeisolierung. Die Wärmeverluste der Pufferspeichervorrichtung in einem unterirdischen Salzstock sind im Vergleich zu Wärmeverlusten in üblichem, nicht salzführendem Gestein deutlich geringer.

Die Kombination aus der Anordnung des unterirdischen Speicherbehälters in einem Hohlraum in einer wasserdichten Gesteinsschicht, vorzugsweise im einem Salzstock, mit dem Einsatz von Salzsole als Pufferspeichermedium bietet weiters den Vorteil, dass das Gestein, insbesondere ein salzführendes Gestein, durch das Pufferspeichermedium nicht mehr oder zumindest nur in einem vertretbaren geringen Ausmaß weiter ausgelaugt wird.

Das System der hier erfindungsgemäß vorgeschlagenen unterirdischen Pufferspeichervorrichtung mit Salzsole als Pufferspeichermedium, das sich in einem unterirdischen Speicherbehälter in Form eines Hohlraums in einem wasserdichten Gestein, vorzugsweise in einem Salzstock, befindet, bietet den Vorteil, dass sich rasch ein Löslichkeitsgleichgewicht zwischen dem Gesteinsmaterial, in dem sich der Hohlraum befindet, und der Salzsole als Pufferspeichermedium bildet.

Der unterirdische Hohlraum ist in seinen Abmessungen oder in seiner Geometrie keinen Einschränkungen unterworfen. Es kann somit ein Hohlraum in jeglicher beliebigen Form, Kontur und Gestalt als unterirdischer Speicherbehälter dienen. Ebenso können mehrere miteinander kommunizierend verbundene Kavitäten bzw. Hohlräume jeweils einzelne Speicherbehälter eines gesamten unterirdischen Speicherbehälters bilden.

Besonders zweckmäßig kann sein, wenn bei einer erfindungsgemäßen Pufferspeichervorrichtung die Salzsole eine wässrige Lösung von Salzen mit mindestens 14 g gelöster Stoffe pro 1l Wasser ist.

In einer Weiterbildung der Erfindung kann bei einer Pufferspeichervorrichtung die Salzsole Natriumchlorid in gelöster Form enthalten.

Natriumchlorid, auch als Kochsalz bezeichnet, kann aus Steinsalz aus unterirdischen Salzlagerstätten beispielsweise durch Aussolung, also durch Auslaugen mithilfe von Wasser von der Erdoberfläche aus gewonnen werden. Weiters kann Kochsalz unter anderem aus Meersalz gewonnen werden.

Wie zuvor bereits festgehalten bietet der Einsatz von Salzsole als Wärmespeichermedium, in dem Natriumchlorid in gelöster Form enthalten ist, den Vorteil, dass sich bei einem unterirdischen Speicherbehälter, der in einer wasserdichten Gesteinsschicht, vorzugsweise in einer salzführenden Gesteinsschicht in einem Salzstock, angeordnet ist, rasch ein Löslichkeitsgleichgewicht einstellt. Somit werden Veränderungen des unterirdischen Speicherbehälters durch unerwünschtes Auslaugen bzw. Auflösen von wasserlöslichen Gesteinsbestandteilen, insbesondere von Salz, hintangehalten.

In einer Weiterbildung der Erfindung kann bei einer Pufferspeichervorrichtung die Salzsole Natriumchlorid in gelöster Form mit einer Konzentration von 2 Gew.-% bis 30 Gew.-%, vorzugsweise von 10 Gew.-% bis 30 Gew.-%, besonders bevorzugt von 20 Gew.-% bis 30 Gew.-%, enthalten.

Aus den vorstehend genannten Gründen ist der Einsatz von Salzsole mit einer höheren Konzentration von Natriumchlorid vorteilhaft, damit sich rasch ein Löslichkeitsgleichgewicht zwischen der Salzsole und dem Gestein, welches den unterirdischen Speicherbehälter bildet, einstellt. Weiters ist der Einsatz von Salzsole mit einer höheren Salzkonzentration von Vorteil, da damit die Wärmespeicherkapazität ansteigt und das Wärmespeichervermögen im Vergleich zu Wasser erhöht wird.

Maximal kann die Konzentration der Salzsole bis zum Erreichen der Löslichkeit von Natriumchlorid in Wasser erhöht werden. Die Löslichkeit von Natriumchlorid in Wasser ist nur wenig temperaturabhängig und beträgt beispielsweise bei einer Temperatur von 20°C 359 g/l der Salzlösung. Dies entspricht einer maximalen Massenkonzentration bzw. einem maximalen Massenanteil von 26,4 Gew.-% bei 20°C.

Von Vorteil kann sein, wenn bei einer erfindungsgemäßen Pufferspeichervorrichtung die Salzsole Kaliumchlorid in gelöster Form enthält.

Die vorstehend genannten Vorteile gelten gleichermaßen für Salzsolen, die Natriumchlorid, die Kaliumchlorid, oder die Mischungen beider Salze gegebenenfalls mit weiteren gelösten Salzen enthalten.

In einer Weiterbildung der Erfindung kann bei einer Pufferspeichervorrichtung die Salzsole Kaliumchlorid in gelöster Form mit einer Konzentration von 2 Gew.-% bis 30 Gew.-%, vorzugsweise von 10 Gew.-% bis 30 Gew.-%, besonders bevorzugt von 20 Gew.-% bis 30 Gew.-%, enthalten.

Die Konzentration der Salzsole kann maximal bis zum Erreichen der Löslichkeit von Kaliumchlorid in Wasser erhöht werden. Die Löslichkeit von Natriumchlorid in Wasser ist nur wenig temperaturabhängig und beträgt beispielsweise bei einer Temperatur von 20°C 347 g/l der Salzlösung.

Besonders zweckmäßig kann bei einer Pufferspeichervorrichtung gemäß der Erfindung das erste Wärmeträgermedium des Primärkreislaufs ausgewählt sein aus der Gruppe: Wasser, Alkohol-Wasser-Lösung, Salz-Wasser-Lösung, Thermoöl.

Vorteilhaft können im Rahmen der Erfindung je nach Aufgabenstellung sowie abhängig vom Temperaturniveau der zu puffernden Überschusswärme unterschiedlichste Medien als erstes Wärmeträgermedium eingesetzt werden. Wärmeträgermedien sollten idealerweise den folgenden Anforderungen genügen: Sie sollen eine hohe spezifische Wärmekapazität bzw. eine große spezifische Schmelzenthalpie, einen großen Wärmeübergangskoeffizient, eine hohe Wärmeleitfähigkeit, einen möglichst niedrigen Gefrierpunkt bzw. Erstarrungspunkt, einen ausreichend hohen Siedepunkt sowie möglichst eine niedrige Viskosität aufweisen. Vorteilhaft sind Wärmeträgermedien nicht brennbar oder explosiv und nicht giftig.

Wasser ist aufgrund seiner sehr hohen spezifischen Wärmekapazität von zirka 4,2 kJ/kg K bzw. seiner hohen spezifischen Verdampfungsenthalpie von rund 2000 kJ/kg ein sehr gutes Wärmeträgermedium.

Wärmeträger aus Wasser und Alkohol sind vorteilhaft nicht oder kaum korrosiv.

Salz-Wasser-Lösungen (Solen) können auch in der Lebensmitteltechnik eingesetzt werden. Die Viskosität von Salz-Wasser-Lösungen ist niedrig.

Thermoöle werden zur Ölkühlung und zur Beheizung von industriellen Anlagen und Prozessen in geschlossenen Kreisläufen verwendet. Sie können je nach ihrer chemischen Zusammensetzung unterschiedliche Eigenschaften aufweisen. Sie lassen sich unterteilen in niedrigviskose, leicht entflammbare Öle mit tiefen Erstarrungs- und Siedepunkten und höherviskose, schwer entflammbare Öle mit höheren Erstarrungs- und Siedepunkten. Beispielsweise zählen Mineralöle, Synthetiköle wie Silikonöl, aromatische Kohlenwasserstoffe (zum Beispiel DP/DPO) oder biologische Öle (zum Beispiel Limonen) zur Gruppe der Thermoöle.

In einer weiteren zweckmäßigen Ausführung der Erfindung kann bei einer Pufferspeichervorrichtung das zweite Wärmeträgermedium des Sekundärkreislaufs ausgewählt sein aus der Gruppe: Wasser, Alkohol-Wasser-Lösung, Ammoniak, Kohlenstoffdioxid, Kohlenwasserstoffe, halogenierte Kohlenwasserstoffe.

Je nach Aufgabenstellung können unterschiedliche Medien als zweites Wärmeträgermedium eingesetzt werden. Es können erforderlichenfalls auch Kühlmittel oder Kältemittel als zweites Wärmeträgermedium eingesetzt werden. Ammoniak, Kohlenstoffdioxid und Wasser, aber auch Kohlenwasserstoffe und Luft werden, im Gegensatz zu halogenierten Kohlenwasserstoffen, auch als natürliche Kältemittel bezeichnet, da diese Substanzen in der Natur vorkommen. Kältemittel transportieren Enthalpie - also Wärmeenergie - von einem zu kühlenden Gegenstand zur Umgebung. Der Unterschied zum Kühlmittel ist, dass ein Kältemittel in einem Kältezyklus dies entlang einem Temperaturgradienten tun kann, so dass die Umgebungstemperatur sogar höher sein darf als die Temperatur des zu kühlenden Gegenstandes, während ein Kühlmittel lediglich in der Lage ist, in einem Kühlzyklus die Enthalpie entgegen dem Temperaturgradienten zu einer Stelle niedrigerer Temperatur zu transportieren.

Ammoniak ist ein klassisches klimaneutrales Kältemittel, das vorwiegend in industriellen Großanlagen zum Einsatz kommt.

Kohlenstoffdioxid besitzt eine sehr große volumetrische Kälteleistung, das umlaufende Kältemittelvolumen ist daher relativ klein. Auch Kohlenstoffdioxid hat den Vorteil, nicht entflammbar zu sein, und trägt nicht zum Ozonabbau bei.

Weiters können auch organische Kältemittel wie beispielsweise Dichlordifluormethan (R-12; Freon-12^{®}) als zweites Wärmeträgermedium eingesetzt werden. Als Halogenkohlenwasserstoffe oder halogenierte Kohlenwasserstoffe werden Kohlenwasserstoffe bezeichnet, bei denen mindestens ein Wasserstoffatom durch eines der Halogene Fluor, Chlor, Brom oder Iod ersetzt wurde. Halogenkohlenwasserstoffe eignen sich auf Grund ihrer Eigenschaften hervorragend als Kältemittel. Allerdings ist zu beachten, dass diese aufgrund ihrer umweltschädlichen Eigenschaften nur in geschlossenen Kreislaufanlagen eingesetzt werden dürfen.

Die vorgenannten Aufgaben werden auch mit einem Verfahren zur Pufferspeicherung von Überschusswärme in einem Wärmespeichermedium mit den Merkmalen des Anspruchs 9 gelöst.

Die abhängigen Verfahrensansprüche betreffen weitere vorteilhafte Ausgestaltungen der Erfindung.

Ein erfindungsgemäßes Verfahren zur Pufferspeicherung von Überschusswärme in einem Wärmespeichermedium ist gekennzeichnet durch die folgenden Schritte:
- Einspeisen von zu speichernder Überschusswärme in einen mit einem ersten Wärmeträgermedium befüllten Primärkreislauf;
- Übertragen der Überschusswärme mit einem im Primärkreislauf angeordneten ersten Wärmeübertrager, der vom ersten Wärmeträgermedium durchströmt wird, an einen mit Salzsole als Wärmespeichermedium befüllten unterirdischen Speicherbehälter wobei der unterirdische Speicherbehälter in einem Hohlraum in einer wasserdichten Gesteinsschicht, vorzugsweise in einem Salzstock, angeordnet ist;
- Zwischenspeichern der Überschusswärme in der Salzsole des unterirdischen Speicherbehälters;
- Bedarfsweises Entnehmen zumindest eines Teils der in der Salzsole zwischengespeicherten Überschusswärme durch Übertragen der Überschusswärme mit einem in einem Sekundärkreislauf angeordneten zweiten Wärmeübertrager, der von einem zweiten Wärmeträgermedium durchströmt wird, von der Salzsole an das zweite Wärmeträgermedium;
- Abführen der Überschusswärme an zumindest einen mit dem Sekundärkreislauf gekoppelten Wärmeverbraucher.

Vorteilhaft wird beim erfindungsgemäßen Pufferspeicherverfahren eine Pufferspeichervorrichtung mit den Merkmalen der Ansprüche 1 bis 8 eingesetzt.

Hinsichtlich der Vorteile des Pufferspeicherverfahrens wird auf die vorgenannten Vorteile der erfindungsgemäßen Pufferspeichervorrichtung verwiesen.

In einer Weiterbildung des erfindungsgemäßen Pufferspeicherverfahrens kann es zweckmäßig sein, wenn der Primärkreislauf mit dem ersten Wärmeübertrager sowie der Sekundärkreislauf mit dem zweiten Wärmeübertrager jeweils wärmeleitend mit dem unterirdischen Speicherbehälter sowie der darin befindlichen Salzsole gekoppelt sind. Vorteilhaft sind der Primärkreislauf sowie der Sekundärkreislauf mit dem unterirdischen Speicherbehälter wärmeleitend verbunden. Entsprechende Wärmeübertrager, die im Primärkreislauf sowie im Sekundärkreislauf angeordnet sind, übertragen die Überschusswärme direkt an die Salzsole bzw. übertragen die gepufferte Überschusswärme im Bedarfsfall wiederum an den Sekundärkreislauf.

Besonders vorteilhaft kann es sein, wenn bei einem erfindungsgemäßen Pufferspeicherverfahren der unterirdische Speicherbehälter in einem Hohlraum in einer wasserdichten Gesteinsschicht, vorzugsweise in einem Salzstock, angeordnet ist und das erste Wärmeträgermedium in einer Rohrleitung des Primärkreislaufs sowie das zweite Wärmeträgermedium in einer Rohrleitung des Sekundärkreislaufs jeweils von der Erdoberfläche bis zum Speicherbehälter sowie zurück an die Erdoberfläche geführt werden.

Wie vorhin bereits festgehalten ist die Nutzung bereits vorhandener unterirdischer Hohlräume als Speicherbehälter besonders nachhaltig für den Betrieb des Pufferspeicherverfahrens.

Zweckmäßig kann bei einem erfindungsgemäßen Pufferspeicherverfahren als Salzsole eine wässrige Lösung von Salzen mit mindestens 14 g gelöster Stoffe pro 1l Wasser eingesetzt werden.

Von Vorteil kann sein, wenn bei einem erfindungsgemäßen Pufferspeicherverfahren die Salzsole Natriumchlorid und/oder Kaliumchlorid in gelöster Form enthält.

In einer Weiterbildung des erfindungsgemäßen Pufferspeicherverfahrens kann die Salzsole Natriumchlorid und/oder Kaliumchlorid in gelöster Form mit einer Konzentration von 2 Gew.-% bis 30 Gew.-%, vorzugsweise von 10 Gew.-% bis 30 Gew.-%, besonders bevorzugt von 20 Gew.-% bis 30 Gew.-%, enthalten.

Die vorstehend genannten Vorteile gelten gleichermaßen für Salzsolen, die Natriumchlorid, die Kaliumchlorid, oder die Mischungen beider Salze gegebenenfalls mit weiteren gelösten Salzen enthalten.

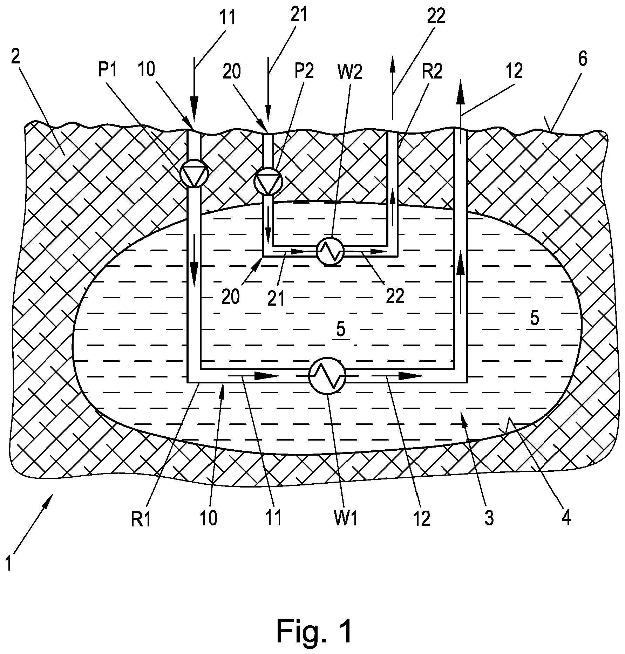

Im Detail wird im Folgenden die beiliegende Figur beschrieben.

Die Figur zeigt in einer schematischen Schnittansicht von der Seite eine erfindungsgemäße Pufferspeichervorrichtung 1, wobei hier innerhalb einer Gesteinsschicht 2 ein unterirdischer Hohlraum 3 als ein unterirdischer Speicherbehälter 3 genutzt wird als Speicherbehälter für ein Wärmespeichermedium. Eine Kontur 4 des unterirdischen Speicherbehälters 3 bzw. des unterirdischen Hohlraums 3 bildet die Grenze zwischen dem Hohlraum 3 und dem umliegenden Gestein 2. Der Speicherbehälter 3 bzw. Hohlraum 3 ist mit Salzsole 5 als Wärmespeichermedium befüllt. Der unterirdische Speicherbehälter 3 befindet sich zur Gänze unter der Erdoberfläche 6. Ein Primärkreislauf 10 sowie ein Sekundärkreislauf 20 sind in der Figur nur so weit skizziert, als die entsprechenden Bestandteile der beiden Kreisläufe 10, 20 ebenfalls unterirdisch angeordnet sind.

Im Primärkreislauf 10 wird ein heißes erstes Wärmeträgermedium 11, welches zuvor mit Überschusswärme bzw. Abwärme beispielsweise aus einem Industriebetrieb beladen wurde, in einer Rohrleitung R1 des Primärkreislaufs 10 in Pfeilrichtung 11 mittels einer Pumpe P1 in Richtung des unterirdischen Speicherbehälters 3 gepumpt. Der Industriebetrieb, in dem die dort vorhandene Überschusswärme beispielsweise mittels eines weiteren Wärmetauschers bzw. Wärmeübertragers in den Primärkreislauf 10 eingespeist wurde, ist in der Figur nicht veranschaulicht. Auch die zur Einspeisung der Überschusswärme in das erste Wärmeträgermedium 11 innerhalb des Primärkreislaufs 10 erforderlichen Apparate und Bauteile wie eben ein weitere Wärmeübertrager sind nicht explizit dargestellt, jedoch dem Fachmann hinlänglich bekannt. Das heiße erste Wärmeträgermedium 11 wird also innerhalb der Rohrleitung R1 bis zu einem Wärmeübertrager W1 des Primärkreislaufs 10 gepumpt, der vom ersten Wärmeträgermedium durchströmt wird. Im Wärmeübertrager W1 wird die Überschusswärme an die Salzsole 5 als Wärmespeichermedium im unterirdischen Speicherbehälter 3 übertragen bzw. an diese abgegeben, wodurch das erste Wärmeträgermedium abkühlt und als vergleichsweise kaltes erstes Wärmeträgermedium 12 im Primärkreislaufs 10 wieder an die Erdoberfläche tritt. Wie vorhin bereits erwähnt sind der Primärkreislauf 10 sowie der im Folgenden beschriebene Sekundärkreislauf 20 jeweils geschlossene Kreisläufe, die der Einfachheit halber in der Figur im Bereich des Niveaus der Erdoberfläche 6 freigeschnitten dargestellt sind. Tatsächlich befinden sich das in der Figur als Pfeil 12 symbolisierte, scheinbar aus der Erdoberfläche 6 austretende kalte erst Wärmeträgermedium 12 sowie das mit Pfeil 11 dargestellte heiße erste Wärmeträgermedium 11 weiterhin innerhalb der geschlossenen Rohrleitung R1 des Primärkreislaufs 10. Das kalte erste Wärmeträgermedium 12 kann wiederum mit Überschusswärme bzw. Abwärme beispielsweise aus einem Industriebetrieb beladen werden, um abermals als heißes erstes Wärmeträgermedium 11 zur Beheizung der Salzsole 5 im Speicherbehälter 3 zu dienen.

Vorteilhaft ist der Speicherbehälter 3 aufgrund des umgebenden Gesteins 2 sehr gut wärmeisoliert, weshalb Wärmeverluste während der Pufferspeicherung reduziert werden können.

Ein separater Sekundärkreislauf 20 beinhaltet ein zweites Wärmeträgermedium, das zur Abfuhr bzw. Abnahme der im Speicherbehälter 3 gepufferten Wärme dient. Analog zum Aufbau des Primärkreislaufs 10 umfasst auch der Sekundärkreislauf 20 eine Pumpe P2, eine Rohrleitung R2 sowie einen Wärmeübertrager W2. Mit dem Pfeil 21 ist kaltes zweites Wärmeträgermedium 21 symbolisiert, das in Pfeilrichtung 21 im Sekundärkreislauf 20 innerhalb der Rohrleitung R2 in Richtung des unterirdischen Speicherbehälters 3 gepumpt wird. Gepufferte Überschusswärme wird im Wärmeübertrager W2 von der zuvor erwärmten Salzsole 5 innerhalb des Speicherbehälters 3 an das kalte zweite Wärmeträgermedium 21 übertragen, das den Wärmeübertrage W2 durchströmt. Durch entsprechende Wärmeübertragung wird zumindest ein Teil der Überschusswärme an das zweite Wärmeträgermedium übertragen, das dadurch erwärmt wird. Mit dem Pfeil 22 ist das erwärmte bzw. heiße Wärmeträgermedium 22 symbolisiert, das anschließend innerhalb des Sekundärkreislaufs 20 nach oben an die Erdoberfläche 6 gelangt und dort - weiterhin innerhalb der Rohrleitung R2 befindlich - die aufgenommene gepufferte Wärme an einen mit dem Sekundärkreislauf 20 gekoppelten Verbraucher übertragt. Der Verbraucher, beispielsweise eine Gebäudeheizung eines Gebäudes, sowie die für die Wärmeabfuhr erforderlichen Apparate und Einrichtungen wie beispielsweise ein weiterer Wärmetauscher, sind der Einfachheit halber in der Figur nicht veranschaulicht. Das zweite Wärmeträgermedium wird dabei entsprechend abgekühlt und steht erneut innerhalb des geschlossenen Sekundärkreislaufs 20 zur Wärmeaufnahme als abgekühltes bzw. kaltes zweites Wärmeträgermedium 21 zur Verfügung.

### LISTE DER BEZUGSZEICHEN

- 1: Pufferspeichervorrichtung
- 2: Gestein
- 3: unterirdischer Speicherbehälter, Hohlraum
- 4: Kontur des unterirdischen Speicherbehälters bzw. Hohlraums
- 5: Salzsole
- 6: Erdoberfläche
- 10: Primärkreislauf
- 11: heißes Wärmeträgermedium des Primärkreislaufs (Pfeil)
- 12: kaltes Wärmeträgermedium des Primärkreislaufs (Pfeil)
- P1: Pumpe im Primärkreislauf
- R1: Rohrleitung des Primärkreislaufs
- W1: Wärmeübertrager des Primärkreislaufs
- 20: Sekundärkreislauf
- 21: kaltes Wärmeträgermedium des Sekundärkreislaufs (Pfeil)
- 22: heißes Wärmeträgermedium des Sekundärkreislaufs (Pfeil)
- P2: Pumpe im Sekundärkreislauf
- R2: Rohrleitung des Sekundärkreislaufs
- W2: Wärmeübertrager des Sekundärkreislaufs

## Patentansprüche

1. Pufferspeichervorrichtung (1), umfassend einen mit Salzsole (5) als Wärmespeichermedium befüllten unterirdischen Speicherbehälter (3), einen mit einem ersten Wärmeträgermedium (11, 12) befüllten Primärkreislauf (10), sowie einen mit einem zweiten Wärmeträgermedium (21, 22) befüllten Sekundärkreislauf (20), wobei ein erster Wärmeübertrager (W1) im Primärkreislauf (10), der vom ersten Wärmeträgermedium (11, 12) durchströmt ist, dazu eingerichtet ist, in den Primärkreislauf (10) eingespeiste Überschusswärme vom ersten Wärmeträgermedium (11, 12) an die Salzsole (5) im unterirdischen Speicherbehälter (3) zu übertragen, und ein zweiter Wärmeübertrager (W2) im Sekundärkreislauf (20), der vom zweiten Wärmeträgermedium (21, 22) durchströmt ist, dazu eingerichtet ist, im Bedarfsfall zumindest teilweise die in der Salzsole (5) im unterirdischen Speicherbehälter (3) gespeicherte Überschusswärme an das zweite Wärmeträgermedium (21, 22) zu übertragen, wobei der Sekundärkreislauf (20) mit zumindest einem Wärmeverbraucher gekoppelt ist, wobei der unterirdische Speicherbehälter (3) ein Hohlraum (3) in einer wasserdichten Gesteinsschicht (2), vorzugsweise in einem Salzstock, ist.

2. Pufferspeichervorrichtung nach Anspruch 1, **dadurch gekennzeichnet, dass** die Salzsole (5) eine wässrige Lösung von Salzen mit mindestens 14 g gelöster Stoffe pro 11 Wasser ist.

3. Pufferspeichervorrichtung nach einem der Ansprüche 1 oder 2, **dadurch gekennzeichnet, dass** die Salzsole (5) Natriumchlorid in gelöster Form enthält.

4. Pufferspeichervorrichtung nach Anspruch 3, **dadurch gekennzeichnet, dass** die Salzsole (5) Natriumchlorid in gelöster Form mit einer Konzentration von 2 Gew.-% bis 30 Gew.-%, vorzugsweise von 10 Gew.-% bis 30 Gew.-%, besonders bevorzugt von 20 Gew.-% bis 30 Gew.-%, enthält.

5. Pufferspeichervorrichtung nach einem der Ansprüche 1 bis 4, **dadurch gekennzeichnet, dass** die Salzsole (5) Kaliumchlorid in gelöster Form enthält.

6. Pufferspeichervorrichtung nach Anspruch 5, **dadurch gekennzeichnet, dass** die Salzsole (5) Kaliumchlorid in gelöster Form mit einer Konzentration von 2 Gew.-% bis 30 Gew.-%, vorzugsweise von 10 Gew.-% bis 30 Gew.-%, besonders bevorzugt von 20 Gew.-% bis 30 Gew.-%, enthält.

7. Pufferspeichervorrichtung nach einem der Ansprüche 1 bis 6, **dadurch gekennzeichnet, dass** das erste Wärmeträgermedium (11, 12) des Primärkreislaufs (10) ausgewählt ist aus der Gruppe: Wasser, Alkohol-Wasser-Lösung, Salz-Wasser-Lösung, Thermoöl.

8. Pufferspeichervorrichtung nach einem der Ansprüche 1 bis 7, **dadurch gekennzeichnet, dass** das zweite Wärmeträgermedium (21, 22) des Sekundärkreislaufs (20) ausgewählt ist aus der Gruppe: Wasser, Alkohol-Wasser-Lösung, Ammoniak, Kohlenstoffdioxid, Kohlenwasserstoffe, halogenierte Kohlenwasserstoffe.

9. Verfahren zur Pufferspeicherung von Überschusswärme in einem Wärmespeichermedium, aufweisend die folgenden Schritte:
- Einspeisen von zu speichernder Überschusswärme in einen mit einem ersten Wärmeträgermedium (11, 12) befüllten Primärkreislauf (10);
- Übertragen der Überschusswärme mit einem im Primärkreislauf (10) angeordneten ersten Wärmeübertrager (W1), der vom ersten Wärmeträgermedium (11, 12) durchströmt wird, an einen mit Salzsole (5) als Wärmespeichermedium befüllten unterirdischen Speicherbehälter (3), wobei der unterirdische Speicherbehälter (3) in einem Hohlraum (3) in einer wasserdichten Gesteinsschicht (2), vorzugsweise in einem Salzstock, angeordnet ist;
- Zwischenspeichern der Überschusswärme in der Salzsole (5) des unterirdischen Speicherbehälters (3);
- Bedarfsweises Entnehmen zumindest eines Teils der in der Salzsole (5) zwischengespeicherten Überschusswärme durch Übertragen der Überschusswärme mit einem in einem Sekundärkreislauf (20) angeordneten zweiten Wärmeübertrager (W2), der von einem zweiten Wärmeträgermedium (21, 22) durchströmt wird, von der Salzsole (5) an das zweite Wärmeträgermedium (21, 22);
- Abführen der Überschusswärme an zumindest einen mit dem Sekundärkreislauf (20) gekoppelten Wärmeverbraucher.

10. Pufferspeicherverfahren nach Anspruch 9, **dadurch gekennzeichnet, dass** der Primärkreislauf (10) mit dem ersten Wärmeübertrager (W1) sowie der Sekundärkreislauf (20) mit dem zweiten Wärmeübertrager (W2) jeweils wärmeleitend mit dem unterirdischen Speicherbehälter (3) sowie der darin befindlichen Salzsole (5) gekoppelt sind.

11. Pufferspeicherverfahren nach Anspruch 9 oder 10, **dadurch gekennzeichnet, dass** das erste Wärmeträgermedium (11, 12) in einer Rohrleitung (R1) des Primärkreislaufs (10) sowie das zweite Wärmeträgermedium (21, 22) in einer Rohrleitung (R2) des Sekundärkreislaufs (20) jeweils von der Erdoberfläche (6) bis zum Speicherbehälter (3) sowie zurück an die Erdoberfläche (6) geführt werden.

12. Pufferspeicherverfahren nach einem der Ansprüche 9 bis 11, **dadurch gekennzeichnet, dass** als Salzsole (5) eine wässrige Lösung von Salzen mit mindestens 14 g gelöster Stoffe pro 11 Wasser eingesetzt wird.

13. Pufferspeicherverfahren nach einem der Ansprüche 9 bis 12, **dadurch gekennzeichnet, dass** die Salzsole (5) Natriumchlorid und/oder Kaliumchlorid in gelöster Form enthält.

14. Pufferspeicherverfahren nach Anspruch 13, **dadurch gekennzeichnet, dass** die Salzsole (5) Natriumchlorid und/oder Kaliumchlorid in gelöster Form mit einer Konzentration von 2 Gew.-% bis 30 Gew.-%, vorzugsweise von 10 Gew.-% bis 30 Gew.-%, besonders bevorzugt von 20 Gew.-% bis 30 Gew.-%, enthält.

## Claims

1. Buffer storage device (1), comprising an underground storage tank (3) filled with brine (5) as a storage medium, a primary circuit (10) filled with a first heat transfer medium (11, 12), and a secondary circuit (20) filled with a second heat transfer medium (21, 22), wherein a first heat exchanger (W1) in the primary circuit (10), through which the first heat transfer medium (11, 12) flows, is set up to transfer excess heat fed into the primary circuit (10) from the first heat transfer medium (11, 12) to the brine (20), 12) fed into the primary circuit (10) to the brine (5) in the underground storage tank (3), and a second heat exchanger (W2) in the secondary circuit (20), through which the second heat transfer medium (21, 22) flows, is set up to transfer at least part of the excess heat stored in the brine (5) in the underground storage tank (3) to the second heat transfer medium (21, 22) when required, wherein the secondary circuit (20) being coupled to at least one heat consumer, wherein the underground storage tank (3) is a cavity (3) in a waterproof rock layer (2), preferably in a salt dome.

2. Buffer storage device according to claim 1, **characterized in that** the brine (5) is an aqueous solution of salts with at least 14 g of dissolved substances per 11 water.

3. Buffer storage device according to one of claims 1 or 2, **characterized in that** the brine (5) contains sodium chloride in dissolved form.

4. Buffer storage device according to claim 3, **characterized in that** the brine (5) contains sodium chloride in dissolved form with a concentration of 2 wt.% to 30 wt.%, preferably from 10 wt.% to 30 wt.%, particularly preferably from 20% to 30% by weight.

5. Buffer storage device according to any one of claims 1 to 4, **characterized in that** the brine (5) contains potassium chloride in dissolved form.

6. Buffer storage device according to claim 5, **characterized in that** the brine (5) contains potassium chloride in dissolved form with a concentration of 2 wt.% to 30 wt.%, preferably from 10 wt.% to 30 wt.%, particularly preferably from 20% to 30% by weight.

7. Buffer storage device according to any one of claims 1 to 6, **characterized in that** the first heat transfer medium (11,12) of the primary circuit (10) is selected from the group: water, alcohol-water solution, salt-water solution, thermal oil.

8. Buffer storage device according to any one of claims 1 to 7, **characterized in that** the second heat transfer medium (21, 22) of the secondary loop (20) is selected from the group: water, alcohol-water solution, ammonia, carbon dioxide, hydrocarbons, halogenated hydrocarbons.

9. A method for buffer storage of excess heat in a heat storage medium, comprising the following steps:
- feeding surplus heat to be stored into a primary circuit (10) filled with a first primary circuit (10) filled with a first heat transfer medium (11, 12);
- transferring the excess heat with a first heat exchanger (W1) arranged in the primary circuit (10), through which the first heat transfer medium (11, 12) flows, to an underground storage tank (3) filled with brine (5) as heat storage medium, the underground storage tank (3) being located in a cavity (3) in a water-tight rock layer (2), preferably in a salt dome; and salt dome;
- intermediate storage of the excess heat in the brine (5) of the underground storage tank (3);
- extracting, as required, at least part of the excess heat temporarily stored in the brine (5) by transferring the excess heat from the brine (5) to the second heat transfer medium (21, 22) by means of a second heat exchanger (W2) which is arranged in a secondary circuit (20) and through which a second heat transfer medium (21, 22) flows;
- discharging the excess heat to at least one heat consumer coupled to the secondary circuit (20). coupled to the secondary circuit (20).

10. Buffer storage method according to claim 9, **characterized in that** the primary circuit (10) with the first heat exchanger (W1) and the secondary circuit (20) with the second heat exchanger (W2) are each connected in a heat-conducting manner to the underground storage tank (3) and to the brine (5) located therein. with the underground storage tank (3) and the brine (5) located therein.

11. Buffer storage method according to claim 9 or 10, **characterized in that** the first heat transfer medium (11, 12) in a pipeline (R1) of the primary circuit (10) and the second heat transfer medium (21, 22) in a pipeline (R2) of the secondary circuit (20), in each case from the earth's surface (6) to the storage container (3) and back to the ground surface (6).

12. Buffer storage process according to one of claims 9 to 11, **characterized in, that** the brine (5) used is an aqueous solution of salts having at least 14 g of dissolved substances per 11 water is used.

13. Buffer storage process according to one of claims 9 to 12, **characterized in that** the brine (5) contains sodium chloride and/or potassium chloride in dissolved form.

14. Buffer storage process according to claim 13, **characterized in that** the brine (5) contains sodium chloride and/or potassium chloride in dissolved form at a concentration of from 2% by weight to 30% by weight, preferably from 10% by weight to 30% by weight, particularly preferably from 20% to 30% by weight.

## Revendications

1. Dispositif d'accumulation (1), comprenant un réservoir de stockage (2) avec de la saumure (5) comme fluide caloporteur réservoir de stockage souterrain (3) rempli d'un premier fluide caloporteur (11, 12), un circuit primaire (10) rempli d'un deuxième fluide caloporteur (21, 22), ainsi qu'un circuit secondaire (20) rempli d'un deuxième fluide caloporteur, un premier échangeur de chaleur (W1) dans le circuit primaire (10), qui est traversé par le premier fluide caloporteur (11, 12), étant conçu pour transmettre à la saumure la chaleur excédentaire injectée dans le circuit primaire (10) par le premier fluide caloporteur (11, 12) à la saumure (5) dans le réservoir de stockage souterrain (3), et un deuxième échangeur de chaleur (W2) dans le circuit secondaire (20), qui est traversé par le deuxième fluide caloporteur (21, 22), est conçu pour transférer, en cas de besoin, au moins partiellement la chaleur excédentaire stockée dans la saumure (5) dans le réservoir de stockage souterrain (3) au deuxième fluide caloporteur (21, 22) le circuit secondaire (20) étant relié à au moins un consommateur de chaleur le réservoir de stockage souterrain (3) étant une cavité (3) dans une couche de roche (2) étanche à l'eau, de préférence dans un dôme de sel.

2. Dispositif de stockage tampon selon la revendication 1, **caractérisé en ce que** la saumure est une solution aqueuse à base d'eau. Saumure (5) est une solution aqueuse de sels avec au moins 14 g de substances dissoutes par 11 d'eau.

3. Dispositif de stockage tampon selon l'une des revendications 1 ou 2, **caractérisé en ce que** la saumure (5) contient du chlorure de sodium sous forme dissoute.

4. Dispositif de stockage tampon selon la revendication 3, **caractérisé en ce que** la saumure est présente sous forme liquide. Saumure (5) contient du chlorure de sodium sous forme dissoute à une concentration de 2 % en poids à 30 % en poids, de préférence de 10 % en poids à 30 % en poids, de manière particulièrement préférée de 20 % à 30 % en poids.

5. Dispositif de stockage tampon selon l'une des revendications 1 à 4, **caractérisé en ce que** la saumure (5) contient du chlorure de potassium sous forme dissoute.

6. Dispositif de stockage tampon selon la revendication 5, **caractérisé en ce que** la saumure est présente sous forme de solution. Saumure (5) contient du chlorure de potassium sous forme dissoute à une concentration de 2 % en poids à 30 % en poids, de préférence de 10 % en poids à 30 % en poids, de manière particulièrement préférée de 20 % à 30 % en poids.

7. Dispositif de stockage tampon selon l'une des revendications 1 à 6, **caractérisé en ce que** le premier fluide caloporteur (11, 12) du circuit primaire (10) est choisi dans le groupe constitué par l'eau, l'eau et l'air. Est choisi dans le groupe : eau, solution alcool-eau, solution sel-eau, Huile thermique

8. Dispositif de stockage tampon selon l'une des revendications 1 à 7, **caractérisé en ce que** le deuxième fluide caloporteur (21, 22) du circuit secondaire est (20) est choisi dans le groupe : eau, solution alcool-eau, ammoniac, dioxyde de carbone, hydrocarbures, hydrocarbures halogénés.

9. Procédé pour le stockage tampon de chaleur excédentaire dans un milieu de stockage. Milieu de stockage de chaleur, comprenant les étapes suivantes :
- Alimentation de la chaleur excédentaire à stocker dans un circuit de chauffage alimenté par un premier fluide caloporteur. circuit primaire (10) rempli d'un fluide caloporteur (11, 12) ;- Transfert de la chaleur excédentaire avec un premier échangeur de chaleur (W1) disposé dans le circuit primaire (10), qui est traversé par le premier fluide caloporteur (11, 12), à un réservoir souterrain rempli de saumure (5) comme fluide d'accumulation de chaleur réservoir d'accumulation souterrain (3), le réservoir d'accumulation souterrain (3) étant situé dans une cavité (3) dans une couche de roche (2) étanche à l'eau, de préférence dans un réservoir de stockage dôme de sel, est disposé ;
- Stockage temporaire de la chaleur excédentaire dans la saumure (5) du réservoir de stockage souterrain (3) ;
- Prélèvement en fonction des besoins d'au moins une partie de la chaleur excédentaire stockée temporairement dans la saumure (5) par transfert de la chaleur excédentaire avec un deuxième échangeur de chaleur (W2) disposé dans un circuit secondaire (20) et traversé par un deuxième fluide caloporteur (21, 22), de la saumure (5) au deuxième fluide caloporteur (21, 22) ;
- Évacuer la chaleur excédentaire vers au moins un consommateur d'énergie relié au circuit secondaire (20) consommateur de chaleur couplé.

10. Procédé de stockage tampon selon la revendication 9, **caractérisé en ce que** le circuit primaire (10) avec le premier échangeur de chaleur (W1) ainsi que le circuit secondaire (20) avec le deuxième échangeur de chaleur (W2) sont respectivement thermoconducteurs avec le réservoir de stockage souterrain (3) ainsi qu'avec la saumure (5) qui s'y trouve sont couplés entre eux.

11. Procédé de stockage tampon selon la revendication 9 ou 10, **caractérisé en ce que** le premier fluide caloporteur (11, 12) dans une tuyauterie (R1) du circuit primaire (10) ainsi que le deuxième fluide caloporteur (21, 22) dans une tuyauterie (R2) du circuit secondaire (11) sont reliés par un câble de liaison à la tuyauterie (R1) du circuit secondaire (11). Circuit secondaire (20), respectivement de la surface terrestre (6) jusqu'au réservoir de stockage (3) ainsi qu'en retour à la surface de la terre (6).

12. Procédé de stockage tampon selon l'une quelconque des revendications 9 à 11, **caractérisé en ce que** on utilise comme saumure (5) une solution aqueuse de sels contenant au moins 14 g de substances dissoutes de substances par 11 d'eau.

13. Procédé de stockage tampon selon l'une des revendications 9 à 12, **caractérisé en ce que** la saumure (5) contient du chlorure de sodium et/ou du chlorure de potassium sous forme dissoute.

14. Procédé de stockage tampon selon la revendication 13, **caractérisé en ce que** la saumure (5) contient du chlorure de sodium et/ou du chlorure de potassium sous forme dissoute à une concentration de 2 % en poids à 30 % en poids, de préférence de 10 % en poids à 30 % en poids, de manière particulièrement préférée de 20 % en poids à 30 % en poids.
